# EUROPÄISCHE PATENTSCHRIFT

(11) **EP 2 711 108 B1**
(45) Veröffentlichungstag und Bekanntmachung des Hinweises auf die Patenterteilung: **08.07.2020**
(21) Anmeldenummer: 13183371.7
(22) Anmeldetag: 06.09.2013
(51) Int. Cl.: B22D 41/56, B22D 46/00, B25J 13/08

(54) **System und Verfahren zur Positionsbestimmung eines metallurgischen Gefäßes**
System and method for determining the position of a metallurgical container
Système et procédé de détermination de la position d'un récipient métallurgique

(30) Priorität: 20.09.2012 DE 102012018568; 21.12.2012 DE 102012224343
(43) Veröffentlichungstag der Anmeldung: 26.03.2014
(73) Patentinhaber: SMS group GmbH, 40237 Düsseldorf (DE)
(72) Erfinder: Heeg, Roland, 66424 Homburg (DE); Wissen, Christoph, 47259 Duisburg (DE); Moors, Mark, 40235 Düsseldorf (DE)
(74) Vertreter: Klüppel, Walter

(56) Entgegenhaltungen:
- WO-A1-2008/025562
- DE-A1-102010 032 879

## Beschreibung

### Technisches Gebiet

Die vorliegende Erfindung betrifft ein System sowie ein Verfahren, welche zur Positionsbestimmung eines metallurgischen Gefäßes dienen.

### Stand der Technik

In Hüttenwerken, wie auch Walzwerken, kommt es vermehrt zum Einsatz von Robotern. Diese kommen insbesondere für Arbeiten zum Einsatz, welche eine unzumutbare körperliche Belastung für einen Bediener darstellen oder diesen gefährden würden. Insbesondere die Handhabung von metallurgischen Gefäßen, wie zum Beispiel Stahlgießpfannen oder Stahlverteilergefäße (Tundishe) erfordern Arbeitsschritte, für welche ein unmittelbarer Einsatz eines Bedieners vermieden werden soll. Entsprechend werden derartige Aufgaben von Robotern übernommen.

Die Handhabung metallurgischer Gefäße unter Verwendung von Robotern erfordert eine genaue Kenntnis der Lage der metallurgischen Gefäße im Raum. Jedoch herrschen bei den Prozessen, bei welchen metallurgische Gefäße zum Einsatz kommen, Toleranzen im Dezimeterbereich, was eine genaue Lagebestimmung der metallurgischen Gefäße im Raum notwendig macht. Folglich müssen diese Toleranzen zunächst manuell ausgeglichen werden. Dies hat beispielsweise zur Folge, dass der Manipulator oder Roboter zunächst manuell an dem metallurgischen Gefäß positioniert werden muss, bevor ein Arbeitsschritt mit dem Roboter durchgeführt werden kann. Muss sich der Bediener dazu in die Nähe des metallurgischen Gefäßes begeben, beseht eine erhöhte gesundheitliche Gefährdung des Bedieners. Muss der Bediener den Roboter manuell über eine Steuervorrichtung in Position bringen, wirkt sich dies negativ auf Prozess- und/oder Zykluszeiten aus.

Es ist bekannt, dass zum Zwecke der Automatisierung der Positionierung eines Roboters an einem metallurgischen Gefäß optische Sensoren eingesetzt werden. Die WO 2008/025562 A1 zeigt beispielsweise eine an einem Roboter angeordnete Kamera, welche in der Lage ist, die Pfannenlage zu erkennen. Der Einsatz von optischen Sensoren in unmittelbarer Nähe zu metallurgischen Gefäßen kann jedoch aufgrund der vorherrschenden Umgebungsbedingungen zu Ungenauigkeiten beziehungsweise zu einer unzuverlässigen Datenermittlung führen und sich negativ auf die Stabilität des Prozesses auswirken.

Die DE 10 2010 032 879 A1 beschreibt ein Verfahren zum Manipulieren eines Objekts mittels eines Roboters.

### Darstellung der Erfindung

Ausgehend von dem bekannten Stand der Technik ist es eine Aufgabe der vorliegenden Erfindung, ein System und ein Verfahren zur Positionsbestimmung eines metallurgischen Gefäßes anzugeben, welche die Positionsbestimmung des metallurgischen Gefäßes verbessert.

Diese Aufgabe wird mittels eines Systems mit den Merkmalen des Anspruchs 1 gelöst. Vorteilhafte Ausgestaltungen ergeben sich aus den Unteransprüchen.

Der Begriff Positionssensor ist in der vorliegenden Beschreibung bevorzugt als ein Sensor zur Bestimmung von Drehwinkeln oder Drehpositionen zu verstehen.

Entsprechend wird ein System nach Anspruch 1 angegeben, bestehend aus einem metallurgischen Gefäß eines Hüttenwerks mit einem Positionselement und einer Vorrichtung zur Positionsbestimmung des metallurgischen Gefäßes, wobei die Vorrichtung erfindungsgemäß einen Roboter mit einem Positionsmittel zum Ineingriffbringen mit dem am metallurgischen Gefäß angeordneten Positionselement zur Positionsbestimmung umfasst. Die Positionsbestimmung erfolgt über den Kontakt zwischen dem Positionsmittel und dem Positionselement.

Dadurch kann die Position des metallurgischen Gefäßes im Raum exakt bestimmt werden und der Einsatz eines Bedieners zur Positionsbestimmung des metallurgischen Gefäßes ist nicht mehr erforderlich. Insbesondere wird ein Bediener nicht den Gefahren in der unmittelbaren Umgebung des metallurgischen Gefäßes ausgesetzt. Darüber hinaus können Arbeitskosten eingespart werden.

Die Positionsbestimmung über den Kontakt zwischen dem Positionsmittel und dem Positionselement ermöglicht auch unter den Umgebungsbedingungen eines metallurgischen Gefäßes zuverlässige Ergebnisse.

Beispielsweise kann so eine erfolgreiche Positionsbestimmung unabhängig von einer von dem metallurgischen Gefäß ausgehenden Dampfbildung oder Rauchentwicklung durchgeführt werden.

In einer bevorzugten Weiterbildung umfasst das Positionsmittel einen Tastsensor. Dadurch kann festgestellt werden, ob beziehungsweise wann das Positionsmittel mit einem anderen Gegenstand, bevorzugt mit dem Positionselement, in Kontakt tritt.

In einer bevorzugten Weiterbildung ist der Tastsensor dazu eingerichtet, auf das Positionsmittel wirkende Kräfte und Momente zu messen.

Dadurch kann die Lage des Positionsmittels zu einem anderen Gegenstand, insbesondere dem Positionselement, bei Kontakt ermittelt werden. Sind Positionsmittel und Positionselement durch den Roboter beispielsweise nicht exakt in Eingriff gebracht, so kann anhand der auf das Positionsmittel wirkenden, über den Tastsensor ermittelten Kräfte und Momente, die Position des Positionsmittels bezüglich des Positionselements bestimmt werden. Entsprechend kann der Roboter aufgrund des Tastsensors automatisch in die Position des Positionselements verfahren werden, so dass auf diese Weise auch die Position des metallurgischen Gefäßes bestimmt werden kann.

In einer weiter bevorzugten Ausführungsform umfasst die Vorrichtung eine Auswerteeinheit, welche dazu eingerichtet ist, ausgehend von den Messdaten des Tastsensors eine neue Messposition des Positionsmittels zu bestimmen.

Dadurch kann sich dem Ineingriffbringen des Positionsmittels mit dem Positionselement schrittweise genähert werden. Anhand der bei einem Positionsmessvorgang mittels des Tastsensors ermittelten Kräfte und Momente, welche bei Kontakt mit dem Positionselement auf das Positionsmittel wirken, kann ermittelt werden, in welche Richtung, um welche Distanz das Positionsmittel durch den Roboter relativ zur aktuellen Messposition verfahren werden muss, um das Positionsmittel mit dem Positionselement in Eingriff zu bringen, oder sich dem Zustand des Eingriffs anzunähern.

In einer bevorzugten Ausgestaltung ist das Positionsmittel dazu eingerichtet, mit dem Positionselement beim Ineingriffbringen eine vorbestimmte Endposition einzunehmen.

Dadurch kann festgestellt werden, ob beziehungsweise wann das Positionsmittel mit dem Positionselement des metallurgischen Gefäßes vollständig in Eingriff gebracht ist. In dem Zustand, in dem das Positionsmittel und das Positionselement vollständig in Eingriff gebracht sind, wirket ein vorbestimmtes Bild von Kräften beziehungsweise Momenten auf den Tastsensor, welches die Endposition zwischen dem Positionsmittel und dem Positionselement repräsentiert. Bevorzugt wirkt in der Endposition nur ein Kraftvektor entlang eines Freiheitsgrades auf den Tastsensor des Positionsmittels.

In einer bevorzugten Weiterbildung ist das Positionsmittel komplementär zu dem Positionselement ausgeführt.

Dadurch können das Positionsmittel und das Positionselement miteinander in Eingriff gebracht werden. Beispielsweise kann das Positionsmittel als weiblicher Teil und das Positionselement als männlicher Teil ausgeführt sein. Dabei sind Positionsmittel und Positionselement nur in einer Endposition vollständig in Eingriff gebracht.

In einer weiter bevorzugten Ausführungsform weisen das Positionsmittel und das Positionselement eine konische Form auf.

Dadurch wird das Ineingriffbringen des Positionsmittels mit dem Positionselement begünstigt. Insbesondere im Fall des Aufeinandertreffens von komplementären konischen Oberflächen des Positionsmittels und des Positionselements, wird das Ineingriffbringen, und somit die Einnahme einer Endposition, gefördert.

In einer bevorzugten Ausgestaltung ist das Positionsmittel hohlkegelförmig und/oder das Positionselement kegelförmig.

Dadurch kann die Lage im Raum des metallurgischen Gefäßes bis auf einen Freiheitsgrad eindeutig bestimmt werden. Bei einem unbestimmten Freiheitsgrad handelt es sich dabei um die Drehachse, welche koaxial zu der Höhe des Kegels, bevorzugt eines geraden Kreiskegels, verläuft. Wird beispielsweise an der Unterseite des metallurgischen Gefäßes gemessen und ist das metallurgische Gefäß drehfest um eine Achse gelagert, die mit den Achsen von Positionselement und Positionsmittel zusammenfällt und in deren Richtung das Positionselement und das Positionsmittel miteinander in Eingriff gebracht werden, so kann die oben beschriebene Messanordnung ausreichen, um die Lage des metallurgischen Gefäßes im Raum sowie die Lage von an dem metallurgischen Gefäß angebrachten Funktionselementen eindeutig zu bestimmen.

Bevorzugt weist das metallurgische Gefäß ein zweites hohlkegelförmiges Positionselement auf, wodurch ein zunächst unbestimmter Freiheitsgrad der Rotationsachse, welche koaxial zur Höhe des Hohlkegels des Positionselements beziehungsweise des Kegels des Positionsmittels verläuft, bestimmt werden kann. Die drehfeste Anordnung des metallurgischen Gefäßes um eine Achse, die mit den Achsen von Positionselement und Positionsmittel zusammenfällt und in deren Richtung das Positionselement und das Positionsmittel miteinander in Eingriff gebracht werden, ist somit nicht erforderlich.

In einer bevorzugten Ausgestaltung weist das Positionsmittel und/oder das Positionselement Vertiefungen auf.

Dadurch können Fremdkörper, wie beispielsweise Schmutz, die sich auf den Kontaktoberflächen des Positionsmittels und des Positionselements befinden, aufgenommen werden. Beispielsweise kann eine Anhaftung auf den Kontaktflächen durch Kontakt und Bewegung des Positionsmittels und des Positionselements gegeneinander abgestreift und in einer der Vertiefungen oder Aussparungen aufgenommen werden oder durch sie hindurchfallen. Somit kann sichergestellt werden, dass das Ineingriffbringen von Positionsmittel und Positionselement nicht behindert oder gestört wird.

In einer Weiterbildung umfasst der Roboter Positionssensoren an seinen Gelenken.

Dadurch ist die Lage des Roboters im Raum, insbesondere die des den Manipulator oder Roboter bildenden Positionsmittels, zu jeder Zeit bekannt. Sind Positionsmittel des Roboters und Positionselemente des metallurgischen Gefäßes vollständig in Eingriff gebracht, so kann die Lage des an dem metallurgischen Gefäß angebrachten Positionselements bestimmt werden.

Berühren sich Positionsmittel und Positionselement infolge einer Roboterbewegung ohne sich dabei im Eingriff miteinander zu befinden, so kann anhand der von der Berührung ausgehenden Kräfte beziehungsweise Momente in Verbindung mit der Information der Positionssensoren eine neue sinnvolle Messposition ermittelt werden. Nach diesem Prinzip kann das Positionsmittel mit Hilfe des Roboters schrittweise an den Eingriff mit dem Positionselement herangetastet werden.

Ist das metallurgische Gefäß drehfest gelagert oder besitzen das Positionselement und das Positionsmittel nach dem Ineingriffbringen in ihrer Endposition keinen rotatorischen Freiheitsgrad, so genügt die Positionsmessung mittels der Positionssensoren des Roboters an einem Positionselement des metallurgischen Gefäßes zur eindeutigen Bestimmung der Lage des metallurgischen Gefäßes im Raum. Ist das metallurgische Gefäß nicht drehfest gelagert oder besitzen das Positionselement und das Positionsmittel nach dem Ineingriffbringen in ihrer Endposition zumindest einen rotatorischen Freiheitsgrad, so ist zur vollständigen Bestimmung der Lage des metallurgischen Gefäßes im Raum zumindest eine weitere Positionsmessung mittels der Positionssensoren des Roboters an einem weiteren, an dem metallurgischen Gefäß angebrachten Positionselement nötig, um die Lage des metallurgischen Gefäßes im Raum eindeutig zu bestimmen.

Die Positionssensoren sind in der Regel in den Gelenken eines Roboterarms angebracht, und sind in der Lage, eine kinematische Kette, bestehend aus einzelnen Gliedern des Roboters, zu bestimmen.

In einer weiter bevorzugten Ausführungsform umfasst das Positionsmittel und/oder das Positionselement Kontaktflächen, deren Kanten Phasen aufweisen.

Dadurch wird ein Ineinanderführen des Positionsmittels und des Positionselements begünstigt. Die Phasen an den Kanten der Kontaktflächen des Positionsmittels und des Positionselements ermöglichen, dass bei einer Bewegung des Positionsmittels durch den Roboter ein Gleiten auf der Kontaktoberfläche des Positionselements unterstützt wird. Das Positionsmittel kann somit die Oberfläche des Positionselements abtasten, bis es die Endposition erreicht hat, ohne dabei vorher mit dem Positionselement zu verkeilen.

Bevorzugt können auch mindestens zwei Positionselemente an dem metallurgischen Gefäß angeordnet sein. Dadurch wird eine eindeutige Bestimmung der Lage des metallurgischen Gefäßes im Raum auch dann ermöglicht, wenn das metallurgische Gefäß gegen eine Rotation um eine Messachse senkrecht zur Oberfläche des metallurgischen Gefäßes, an der sich die Positionselemente befinden, nicht gesichert ist.

Die oben genannte Aufgabe wird auch durch ein Verfahren mit den Merkmalen des Anspruchs 12 gelöst. Entsprechend umfasst das Verfahren zur Positionsbestimmung eines metallurgischen Gefäßes mittels eines Systems gemäß einem der Ansprüche 1 bis 11, dass ein Positionsmittel eines Roboters zur

Positionsbestimmung mit einem, am metallurgischen Gefäß angeordneten Positionselement in Eingriff gebracht wird.

Eine vorteilhafte Ausgestaltung dieses Verfahrens ergibt sich aus dem Unteranspruch.

Entsprechend wird ein Positionsmessvorgang iterativ ausgeführt, bis zwischen Positionsmittel und Positionselement eine definierte Endposition erreicht wird.

So können das Positionsmittel und das Positionselement schrittweise in Eingriff gebracht werden. Dabei tastet das Positionsmittel das metallurgische Gefäß, bevorzugt das auf dem metallurgischen Gefäß angebrachte Positionselement ab, bis es die Endposition erreicht hat.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
Figur 1 schematisch eine Vorrichtung zur Positionsbestimmung eines metallurgischen Gefäßes, und
Figur 2 schematisch eine Detailansicht eines Positionselements und eines Positionsmittels einer Vorrichtung zur Positionsbestimmung eines metallurgischen Gefäßes.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

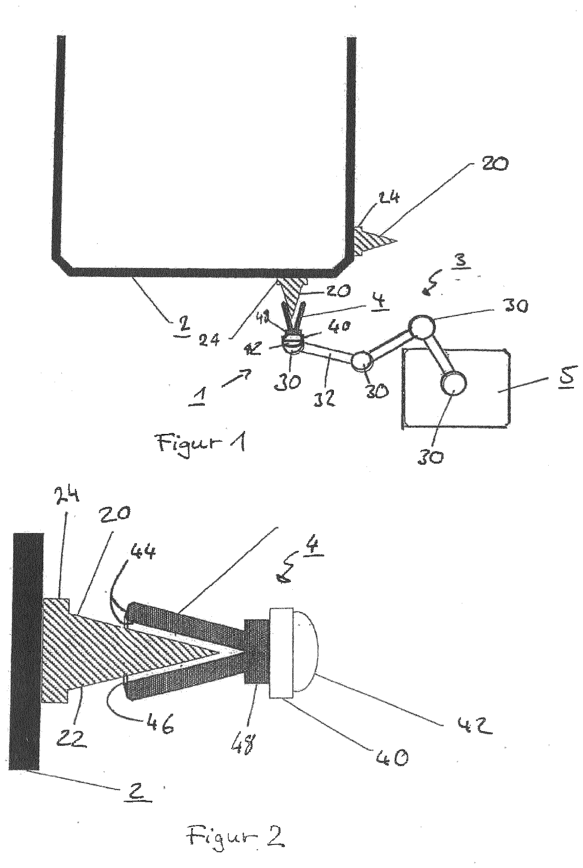

Figur 1 zeigt schematisch eine Vorrichtung 1 zur Positionsbestimmung eines metallurgischen Gefäßes 2 in einem Hüttenwerk. Dabei ist am Ende des Arms eines Roboters 3 ein Positionsmittel 4 angeordnet, welches zur Bestimmung der Lage des metallurgischen Gefäßes 2 im Raum mit einem, an dem metallurgischen Gefäß 2 angeordneten Positionselement 20 in Eingriff gebracht werden kann. Befinden sich das Positionsmittel 4 und das Positionselement 20 in Eingriff, so kann auf der Grundlage der Kenntnis der Koordinaten des Positionsmittels 4 die Position beziehungsweise die Lage des metallurgischen Gefäßes 2 im Raum beziehungsweise bezüglich der Roboterkoordinaten bestimmt werden.

Figur 1 zeigt ein metallurgisches Gefäß 2, welches in einem Hüttenwerk Anwendung findet. Dabei kann es sich bei dem metallurgischen Gefäß 2 beispielsweise um eine Stahlgießpfanne oder ein Stahlverteilergefäß (Tundish) handeln. Auf der Außenseite des metallurgischen Gefäßes 2 sind zwei Positionselemente 20 angeordnet, welche zur Bestimmung der Lage des metallurgischen Gefäßes im Raum mit dem Positionsmittel 4 in Eingriff gebracht werden können. Die Positionselemente 20 weisen eine kegelförmige Form auf, wobei die Grundfläche des Positionselements in einen Flansch 24 übergeht, welcher an der Oberfläche der Außenseite des metallurgischen Gefäßes 2 angeflanscht ist. Dabei ist der Flansch 24 mit dem metallurgischen Gefäß 2 über eine Schweißverbindung verbunden. Alternativ kann der Flansch 24 des Positionselements 20 auch über eine Niet- oder eine Schraubverbindung mit dem metallurgischen Gefäß 2 verbunden sein.

Darüber hinaus bestehen die Positionselemente 20 aus einem hitzebeständigen Material, bevorzugt einer Stahllegierung. Dadurch kann sichergestellt werden, dass auch bei hohen Temperaturen, ausgehend von dem Inhalt des metallurgischen Gefäßes 2, die Positionselemente 20 zur Positionsbestimmung geeignet sind.

Figur 1 zeigt weiterhin einen Roboter 3, welcher vier Gelenke 30 sowie drei Armsegmente 32 aufweist. Dabei sind die Gelenke 30 des Roboters 3 derart ausgebildet, dass das Positionsmittel 4 im Raum verfahren beziehungsweise verschwenkt werden kann, so dass es stets mit den Positionselementen 20 in Eingriff gebracht werden kann. Bevorzugt handelt es sich bei dem Roboter 3 um einen Sechs-Achs-Roboter, welcher sechs Rotationsachsen aufweist.

Die Gelenke 30, welche bevorzugt jeweils um eine Rotationsachse verschwenkt werden können, weisen Positionssensoren auf, welche den Drehwinkel eines Gelenks 30 um eine entsprechende Rotationsachse messen. Die über die Positionssensoren ermittelten Winkelstellungen der jeweiligen Gelenke 30 werden in einer Auswerteeinheit 5 zusammengeführt. Durch die Kenntnis der Geometrie der Bestandteile des Roboters 3 sowie der Winkelstellung der einzelnen Gelenke 30 können die Koordinaten des am Roboter 3 angebrachten Positionsmittels 4 bestimmt werden.

Das Positionsmittel 4 ist über Flansche 48 und 40 mit dem äußersten Gelenk 30 des Roboters 3 verbunden. Das Positionsmittel 4 und die Flansche 40 und 48 sind dabei aus Metall, bevorzugt einer Stahllegierung, gefertigt.

Das Positionsmittel 4 weist eine hohlkegelförmige Form auf, wobei die Spitze des Hohlkegels des Positionsmittels 4 in einen Flansch 48 übergeht, welcher mit dem Flansch 40 verbunden ist.

Die Kontaktflächen 22 beziehungsweise 44 des Positionselements 20 beziehungsweise des Positionsmittels 4 weisen glatte, reibungsarme Oberflächen auf, welche ein Ineinanderführen beziehungsweise Ineingriffbringen des Positionselements 20 mit dem Positionsmittel 4 begünstigen.

An dem Flansch 40 ist ein Tastsensor 42 angeordnet, welcher dazu dient, die auf das Positionsmittel 4 bei Kontakt mit dem Positionselement 20 wirkenden Kräfte und Momente zu messen. Die Messwerte des Tastsensors 42 werden an die Auswerteeinheit 5 weitergegeben.

Bewegt der Roboter 3 das Positionsmittel 4 über das Positionselement 20, so dass die Kontaktflächen 22 beziehungsweise 44 des Positionselements 20 beziehungsweise des Positionsmittels 4 kollidieren, können die von der Kollision auf das Positionsmittel 4 wirkenden Kräfte beziehungsweise Momente an dem Tastsensor 22 gemessen werden. Die Auswerteeinheit 5 ist dabei in der Lage, anhand der auf der Kollision des Positionsmittels 4 mit dem Positionselement 20 basierenden Messdaten eine neue Messposition des Positionsmittels 4 zu bestimmen, wobei die Auswerteeinheit 5 das Ziel verfolgt, das Positionsmittel 4 weiter über das Positionselement 20 zu schieben. Folglich wird nach jedem Inkontakttreten der Kontaktflächen 22 beziehungsweise 44 des Positionselements 20 beziehungsweise des Positionsmittels 4 der Kontakt gelöst und versucht, das Positionsmittel 4 weiter über das Positionselement 20 zu verfahren.

Durch eine iterative Ausführung der oben beschriebenen Vorgehensweise kann das Positionsmittel 4 auf dem Positionselement 22 eine Endposition erreichen, in welcher das Positionsmittel 4 mit dem Positionselement 20 vollständig in Eingriff ist.

Figur 2 ist schematisch eine Detailansicht des Positionsmittels 4 sowie des Positionselements 20 zu entnehmen. Dabei sind Positionsmittel 4 und Positionselement 20 kurz davor, miteinander in Eingriff zu gelangen.

Wird die Endposition erreicht, stellt sich am Tastsensor 42 ein vorbestimmtes Bild von auf das Positionsmittel 4 wirkenden Kräften beziehungsweise Momenten ein. Die in Figur 1 gezeigte Auswerteeinheit 5 kann dann über die Positionssensoren der Gelenke 30 des Roboters 3 die Lage des Positionsmittels 40 und somit die Lage des metallurgischen Gefäßes 2 im Raum bestimmen.

Ist die Lage des metallurgischen Gefäßes bezüglich einer Drehachse, welche orthogonal zur Oberfläche des metallurgischen Gefäßes 2, an dem sich ein Positionselement befindet, verläuft, nicht bekannt, so kann der oben beschriebene Messvorgang an mindestens zwei unterschiedlichen Messelementen 20 durchgeführt werden. Hierbei können die mindestens zwei unterschiedlichen Messelemente an der gleichen oder, wie in Fig. 1 gezeigt, an unterschiedlichen Oberflächen des metallurgischen Gefäßes angebracht sein.

### Bezugszeichenliste

- 1: Vorrichtung
- 2: Metallurgisches Gefäß
- 20: Positionselement
- 22: Kontaktfläche
- 24: Flansch
- 3: Roboter
- 30: Gelenk
- 32: Armsegment
- 4: Positionsmittel
- 40: Flansch
- 42: Tastsensor
- 44: Kontaktfläche
- 46: Fase
- 48: Flansch
- 5: Auswerteeinheit

## Patentansprüche

1. System bestehend aus einem metallurgischen Gefäß (2) eines Hüttenwerks mit einem Positionselement (20) und einer Vorrichtung (1) zur Positionsbestimmung des metallurgischen Gefäßes (2), wobei die Vorrichtung (1)
**gekennzeichnet ist durch**
einen Roboter (3) mit einem Positionsmittel (4) zum Ineingriffbringen mit dem am metallurgischen Gefäß (2) angeordneten Positionselement (20) zur Positionsbestimmung, so dass die Positionsbestimmung über den Kontakt zwischen dem Positionsmittel (4) und dem Positionselement (20) erfolgt.

2. System gemäß Anspruch 1, **dadurch gekennzeichnet, dass** das Positionsmittel (4) komplementär zu dem Positionselement (20) ausgeführt ist.

3. System gemäß Anspruch 1 oder 2, **dadurch gekennzeichnet, dass** das Positionsmittel (4) einen Tastsensor (42) umfasst.

4. System gemäß Anspruch 3, **dadurch gekennzeichnet, dass** der Tastsensor (42) dazu eingerichtet ist, auf das Positionsmittel (4) wirkende Kräfte und Momente zu messen.

5. System gemäß Anspruch 3 oder 4, **dadurch gekennzeichnet, dass** die Vorrichtung (1) eine Auswerteeinheit (5) umfasst, welche dazu eingerichtet ist, ausgehend von den Messdaten des Tastsensors (42) eine neue Messposition des Positionsmittels (4) zu Bestimmen.

6. System gemäß einem der vorhergehenden Ansprüche, **dadurch gekennzeichnet, dass** Positionsmittel (4) dazu eingerichtet ist, mit dem Positionselement (20) beim Ineingriffbringen eine vorbestimmte Endposition einzunehmen.

7. System gemäß einem der vorhergehenden Ansprüche, **dadurch gekennzeichnet, dass** das Positionsmittel (4) und das Positionselement (20) eine konische Form aufweisen.

8. System gemäß einem der vorhergehenden Ansprüche, **dadurch gekennzeichnet, dass** das Positionsmittel (4) kegelförmig und/oder das Positionselement (20) hohlkegelförmig ist.

9. System gemäß einem der vorhergehenden Ansprüche, **dadurch gekennzeichnet, dass** das Positionsmittel (4) und/oder das Positionselement (20) Vertiefungen oder Aussparungen aufweisen.

10. System gemäß einem der vorhergehenden Ansprüche, **dadurch gekennzeichnet, dass** der Roboter (3) Positionssensoren an seinen Gelenken (30) umfasst.

11. System gemäß einem der vorhergehenden Ansprüche, **dadurch gekennzeichnet, dass** das Positionsmittel (4) und/oder das Positionselement (20) Kontaktflächen (22, 44) umfasst, deren Kanten Fasen (46) aufweisen.

12. Verfahren zur Positionsbestimmung eines metallurgischen Gefäßes (2) mittels eines Systems gemäß einem der Ansprüche 1 bis 11,
**dadurch gekennzeichnet, dass**
das Positionsmittel (4) des Roboters (3) zur Positionsbestimmung mit dem am metallurgischen Gefäß (2) angeordneten Positionselement (20) in Eingriff gebracht wird, so dass die Positionsbestimmung über den Kontakt zwischen dem Positionsmittel (4) und dem Positionselement (20) erfolgt.

13. Verfahren gemäß Anspruch 12, **dadurch gekennzeichnet, dass** ein Positionsmessvorgang iterativ ausgeführt wird, bis zwischen Positionsmittel (4) und Positionselement (20) eine definierte Endposition erreicht wird.

## Claims

1. System consisting of a metallurgical vessel (2) of a steelworks with a position element (20) and a device (1) for determining the position of the metallurgical vessel (2), wherein the device (1)
is **characterised by**
a robot (3) with position means (4) for coming into engagement with the position element (20), which is arranged at the metallurgical vessel (2), for positional determination so that the positional determination takes place by way of the contact between the position means (4) and the position element (20).

2. System according to claim 1, **characterised in that** the position means (4) is constructed to be complementary with the position element (20).

3. System according to claim 1 or 2, **characterised in that** the position means (4) comprises a touch sensor (42).

4. System according to claim 3, **characterised in that** the touch sensor (42) is arranged to measure forces and moments acting on the position means (4).

5. System according to claim 3 or 4, **characterised in that** the device (1) comprises an evaluating unit (5) which is arranged for the purpose of determining a new measured position of the position means (4) based on the measurement data of the touch sensor (42).

6. System according to any one of the preceding claims, **characterised in that** the position means (4) is arranged for the purpose of adopting a predetermined end position when coming into engagement with the position element (20).

7. System according to any one of the preceding claims, **characterised in that** the position means (4) and the position element (20) have a conical form.

8. System according to any one of the preceding claims, **characterised in that** the position means (4) is conical and/or the position element (20) has a conical cavity.

9. System according to any one of the preceding claims, **characterised in that** the position means (4) and/or the position element (20) has or have depressions or recesses.

10. System according to any one of the preceding claims, **characterised in that** the robot (3) comprises position sensors at joints (30) thereof.

11. System according to any one of the preceding claims, **characterised in that** the position means (4) and/or the position element (20) has or have contact surfaces (22, 44), the edges of which have chamfers (46).

12. Method for determining the position of a metallurgical vessel (2) by means of a system according to any one of claims 1 to 11,
**characterised in that**
the position means (4) of the robot (3) is, for positional determination, brought into engagement with the position element (20), which is arranged at the metallurgical vessel (2), so that the positional determination takes place by way of the contact between the position means (4) and the position element (20).

13. Method according to claim 12, **characterised in that** a position measuring process is executed iteratively until a defined end position between the position means (4) and position element (20) is achieved.

## Revendications

1. Système constitué par une cuve métallurgique (2) d'une usine sidérurgique comprenant un élément de positionnement (20) et un dispositif (1) pour la détermination de la position de la cuve métallurgique (2), dans lequel le dispositif (1) est **caractérisé par** un robot (3) comprenant un moyen de positionnement (4) destiné à entrer en engrènement avec l'élément de positionnement (20) disposé contre la cuve métallurgique (2) à des fins de détermination de la position, d'une manière telle que la détermination de la position a lieu par l'intermédiaire du contact entre le moyen de positionnement (4) et l'élément de positionnement (20).

2. Système selon la revendication 1, **caractérisé en ce que** le moyen de positionnement (4) est réalisé de manière complémentaire à l'élément de positionnement (20).

3. Système selon la revendication 1 ou 2, **caractérisé en ce que** le moyen de positionnement (4) comprend un palpeur (42).

4. Système selon la revendication 3, **caractérisé en ce que** le palpeur (42) est conçu pour mesurer les forces et les couples qui agissent sur le moyen de positionnement (4).

5. Système selon la revendication 3 ou 4, **caractérisé en ce que** le dispositif (1) comprend une unité d'évaluation (5) qui est conçue pour déterminer une nouvelle position de mesure du moyen de positionnement (4) à partir des données de mesure du palpeur (42).

6. Système selon l'une quelconque des revendications précédentes, **caractérisé en ce que** le moyen de positionnement (4) est conçu pour prendre une position terminale prédéfinie avec l'élément de positionnement (20) lors de l'engrènement.

7. Système selon l'une quelconque des revendications précédentes, **caractérisé en ce que** le moyen de positionnement (4) et l'élément de positionnement (20) présentent une forme conique.

8. Système selon l'une quelconque des revendications précédentes, **caractérisé en ce que** le moyen de positionnement (4) possède une configuration de forme conique et/ou l'élément de positionnement (20) possède une configuration en forme de cône creux.

9. Système selon l'une quelconque des revendications précédentes, **caractérisé en ce que** le moyen de positionnement (4) et/ou l'élément de positionnement (20) présentent des renfoncements ou des évidements.

10. Système selon l'une quelconque des revendications précédentes, **caractérisé en ce que** le robot (3) comprend des capteurs de position contre ses articulations (30).

11. Système selon l'une quelconque des revendications précédentes, **caractérisé en ce que** le moyen de positionnement (4) et/ou l'élément de positionnement (20) comprend/comprennent des surfaces de contact (22,44) dont les bords présentent des chanfreins (46).

12. Procédé destiné à la détermination de la position d'une cuve métallurgique (2) au moyen d'un système selon l'une quelconque des revendications 1 à 11, **caractérisé en ce que** le moyen de positionnement (4) du robot (3) entre en engrènement, à des fins de détermination de la position, avec l'élément de positionnement (20) disposé contre la cuve métallurgique (2), d'une manière telle que la détermination de la position a lieu par l'intermédiaire du contact entre le moyen de positionnement (4) et l'élément de positionnement (20).

13. Procédé selon la revendication 12, **caractérisé en ce qu'**on met en oeuvre un processus de mesure de la position de manière itérative, jusqu'à ce que l'on atteigne une position terminale définie entre le moyen de positionnement (4) et l'élément de positionnement (20).
